# EUROPEAN PATENT APPLICATION

(11) **EP 2 556 745 A1**
(43) Date of publication of application: **13.02.2013**
(21) Application number: 11765284.2
(22) Date of filing: 24.02.2011
(51) Int. Cl.: A01G 7/00

(54) **LIGHTING DEVICE, PLANT CULTIVATION DEVICE, AND METHOD FOR COOLING LIGHTING DEVICE**

(30) Priority: 09.04.2010 JP 2010090914
(71) Applicant: Sharp Kabushiki Kaisha, Osaka-shi, Osaka 545-8522 (JP)
(72) Inventor: OHURA, Chikako, Osaka-shi, Osaka 545-8522 (JP); FUJI, Hiroshi, Osaka-shi, Osaka 545-8522 (JP); OHTA, Toshihiro, Osaka-shi, Osaka 545-8522 (JP)
(74) Representative: Müller - Hoffmann & Partner
(86) International application number: PCT/JP2011/054186
(87) International publication number: WO 2011/125382

(57) **Abstract**

A lighting device (20) included in a plant cultivation device (10) includes: a light source unit (25) including an LED serving as a light source; and a cooling unit (30) including a cooling section (21) which allows a cooling medium to flow therein, the cooling unit (30) cooling the light source by heat exchange between the cooling medium supplied to the inside of the cooling section (21) and the light source unit (25). A fan (26) provided in the cooling unit (30) starts and stops supply of the cooling medium in accordance with the temperature (T) measured by a light source temperature sensor (27) provided to the light source unit (25). This makes it possible for a lighting device for plant cultivation and a plant cultivation device to reduce formation of condensation during cooling of the light source, while achieving efficient cooling of the light source.

## Description

### Technical Field

The present invention relates to a lighting device for plant cultivation, a plant cultivation device including the lighting device, and a method for cooling a light source included in the lighting device.

### Background Art

In recent years, the size of the food market, in particular the size of the fresh vegetable market, has been growing. On the other hand, climate change, shrinkage in the farm population, aging of farmers, decrease in food self-sufficiency rate, and fraudulent claiming of origin etc. have become more prominent, and thus food security and safety have been increasingly attracting attention.

Under such circumstances, a so-called plant factory has been showing promise to for example provide organic vegetables, improve traceability of products such as vegetables etc., achieve stable production and supply, and improve food self-sufficiency rate. In conventional plant factories, for example a fluorescent lamp or an incandescent lamp is used as a light source, and plants are grown by irradiation with light from such a lamp.

Meanwhile, recently, a lighting device using a light emitting diode (LED) as a light source has been used in various fields. Also in the plant factories and plant cultivation devices, the use of an LED lighting device as an artificial light source has been proposed.

LEDs are very advantageous as light sources for plant cultivation, for the following reasons. The LEDs are effective as light sources for plants as compared to conventional light sources such as incandescent lamps, fluorescent lamps and high-pressure sodium lamps, because the wavelengths of the LEDs can be freely selected so that only wavelengths necessary for the plants are used. In addition, in the LEDs, there is no heat radiation in emission spectrum. That is, conventional light sources are less advantageous in light use efficiency, because, according to the conventional light sources, it is necessary to avoid direct illumination of plants at close range (i.e., it is necessary to provide a heat ray eliminating device that is expensive and takes up a lot of space) in order to prevent problems such as scorch due to heat rays.

In contrast, using an LED as a light source makes it possible to irradiate plants from a very short distance, because the LEDs are capable of emitting rays without heat radiation. Further, since the plants are efficiently irradiated with light having the wavelengths necessary for them, the plants absorb light with higher efficiency. This makes it possible to cultivate plants with relatively weak light. Accordingly, it is possible to reduce power consumption and to achieve a very high-efficiency lighting device for plant cultivation.

As has been described, the lighting device for plant cultivation can use as a light source an incandescent lamp, a fluorescent lamp, a high-pressure sodium lamp or an LED etc. For all of these light sources, their heat generation is a problem.

Specifically, in a case where a plant is cultivated with use of a plant cultivation device, it is desirable to control the temperature inside a cultivation room to a temperature suitable for the plant. However, if an incandescent lamp or the like is used as a light source of the lighting device, heat rays are generated as above. This makes it difficult to control the temperature inside the plant cultivation room.

On the other hand, in a case of using an LED light source, the LED light source does not generate heat rays, unlike the fluorescent lamp, incandescent lamp, and high-pressure sodium lamp. However, part of electric power supplied to the LED light source is not converted into light, and the temperature of the LED element itself increases (i.e., the LED element generates heat). Due to such heat generated by the LED, the temperature of the surface of an LED package may reach approximately 40°C to 80°C. This is not preferable because performance and the life of the LED element may decrease.

To address this, it has been desired to take some measure for reducing heat generation by the light source. For example, Patent Literature 1 proposes the following configuration. The temperature of inside air increased due to heat generated by the light source is reduced by (i) configuring a plant cultivation room such that it has a double structure consisting of an inner room and an outer room and (ii) introducing outside air between the inner room and the outer room, thereby causing heat exchange between air inside the inner room (inside air) and the outside air serving as a cooling medium.

### Citation List

### Patent Literature

Patent Literature 1
   Japanese Utility Model Application Publication, Jitsukaisho, No. 64-24947 U (Publication Date: February 10, 1989)

### Summary of Invention

### Technical Problem

However, usually, the humidity in a plant cultivation room is kept high. Therefore, according to the configuration described in the Patent Literature 1, condensation may from on a boundary wall between outside air and inside air in the inner room if the temperature of the outside air is much lower than the temperature of the inside air. The formation of condensation is not preferable, because it may cause problems on devices, such as a light source and a sensor, inside the plant cultivation device. Further, the formation of condensation may cause diseases of plants, and thus adversely affect plants to be cultivated.

In particular, in a case where the light source is an LED, probably the LED is provided so as to be close to the cooling medium for the purpose of slowing deterioration of the LED due to heat generation. However, if the LED is provided so as to be close to the cooling medium, the LED becomes more susceptible to condensation.

The present invention has been made in view of the above problems, and an object of the present invention is to achieve, in a lighting device for plant cultivation and a plant cultivation device, efficient cooling of a light source while reducing condensation that forms during the cooling.

### Solution to Problem

In order to attain the above object, a lighting device in accordance with the present invention is a lighting device for irradiating a plant with light, including: a light source unit including a light source; a cooling unit including a cooling section which allows a cooling medium to flow therein, the cooling unit cooling the light source by heat exchange between the cooling medium supplied to the inside of the cooling section and the light source unit; a temperature sensor for measuring the temperature of the light source unit; and a cooling medium flow control section for starting and stopping supply of the cooling medium in accordance with the temperature measured by the temperature sensor.

The lighting device of the present invention includes the cooling unit for cooling the light source with the cooling medium. The cooling unit is configured such that supply of the cooling medium is controlled in accordance with the temperature of the light source unit measured by the temperature sensor.

According to the above configuration, it is possible to supply the cooling medium only during a period during which the light source unit is desired to be cooled. Accordingly, it is possible to prevent overcooling of the light source unit by stopping supply of the cooling medium during a period during which the light source unit is low enough in temperature and thus does not need to be cooled. This makes it possible to make condensation less likely to form on the light source unit. Further, by stopping supply of the cooling medium when no cooling is necessary, it is possible to reduce the operating time of the cooling unit, and thus possible to reduce operating cost of the lighting device.

A method of cooling a lighting device in accordance with the present invention is a method of cooling the lighting device including (i) a light source unit including a light source for irradiating a plant with light and (ii) a cooling unit including a cooling section which allows a cooling medium to flow therein, the cooling unit cooling the light source by heat exchange between the cooling medium supplied to the inside of the cooling section and the light source unit, said method including the steps of: measuring the temperature of the light source unit; and starting and stopping supply of the cooling medium in accordance with the temperature of the light source unit thus measured.

According to the method of cooling the lighting device of the present invention, supply of the cooling medium is controlled in accordance with the temperature of the light source unit measured by the temperature sensor.

According to the above method, it is possible to supply the cooling medium only during a period during which the light source unit is desired to be cooled. Accordingly, it is possible to make condensation less likely to form on the light source unit by stopping supply of the cooling medium during a period during which the light source unit is low enough in temperature and thus does not need to be cooled. Further, by stopping supply of the cooling medium when no cooling is necessary, it is possible to reduce the operating time of the cooling unit, and thus possible to reduce operating cost of the lighting device.

### Advantageous Effects of Invention

The present invention makes it possible to achieve efficient cooling of a light source for plant cultivation, and to reduce condensation forming around the light source.

### Brief Description of Drawings

Fig. 1

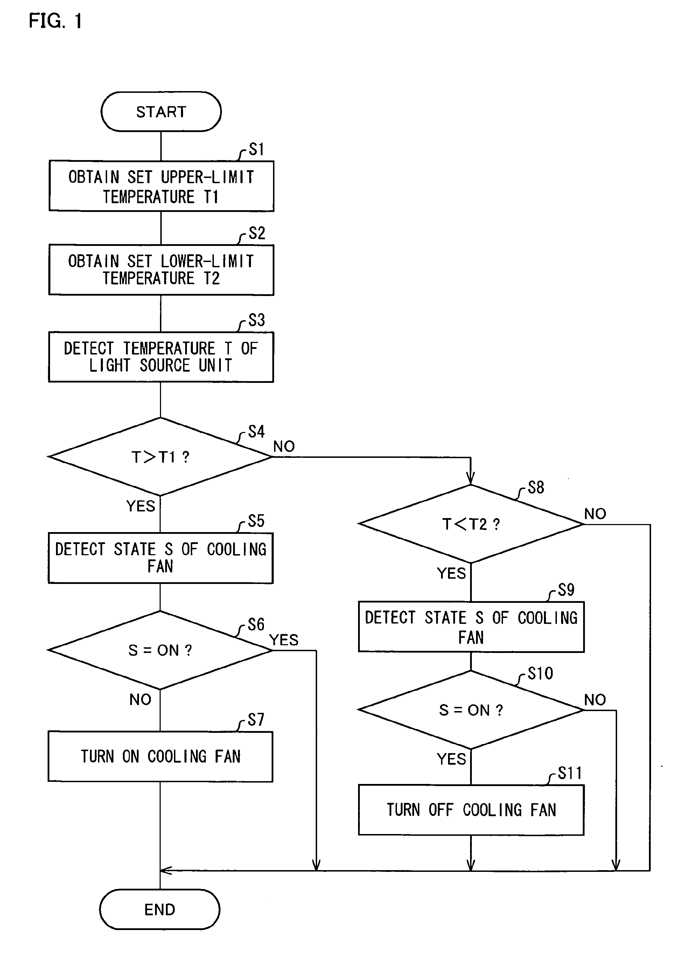

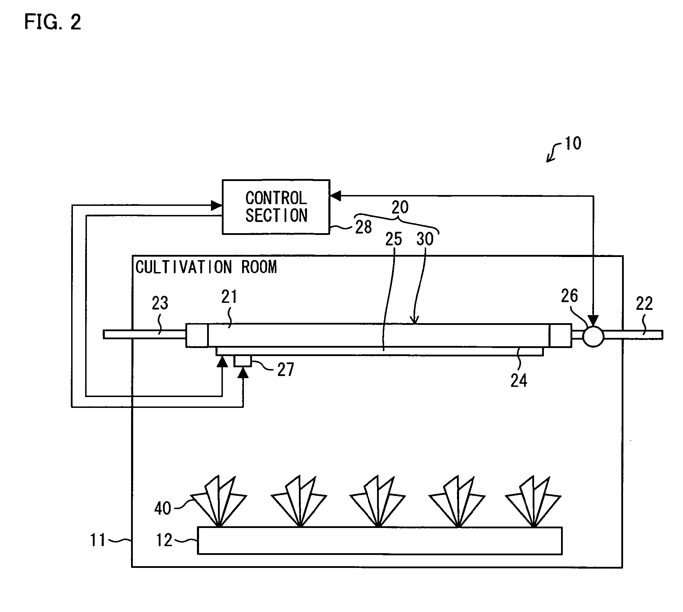

   Fig. 1 is a flowchart showing processes of controlling ON/OFF of a cooling fan provided in a plant cultivation device shown in Fig. 2.
Fig. 2
   Fig. 2 is a view schematically illustrating a configuration of a plant cultivation device in accordance with an embodiment of the present invention.
Fig. 3

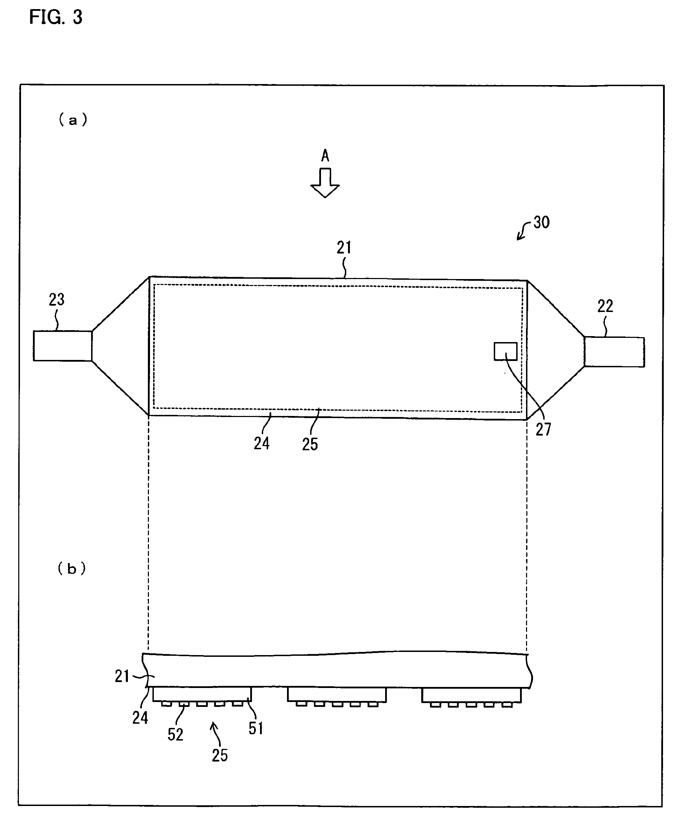

   Fig. 3 is a plan view illustrating an example of a configuration of a cooling unit of the embodiment.
Fig. 4

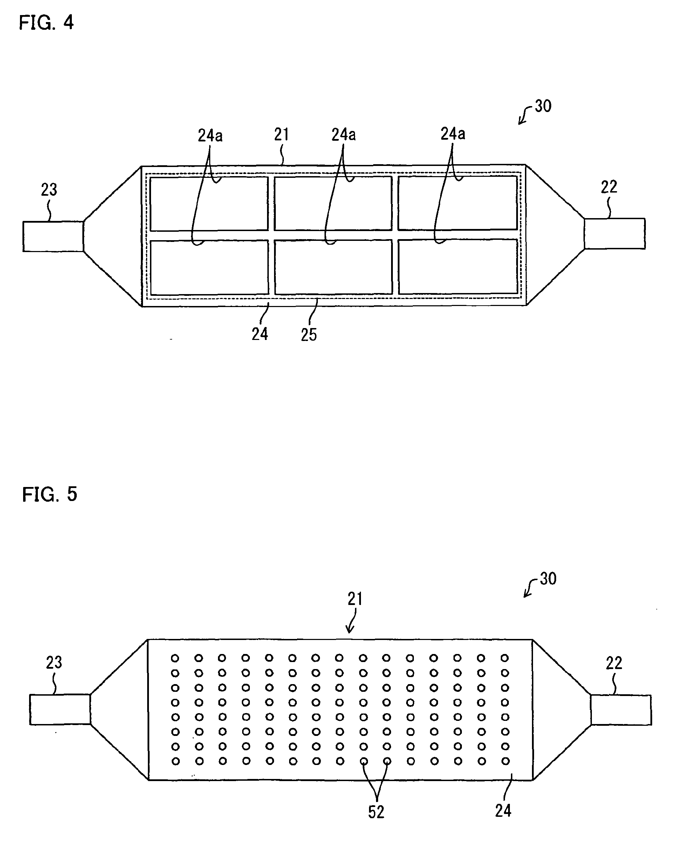

   Fig. 4 is a plan view illustrating another example of a configuration of the cooling unit.
Fig. 5
   Fig. 5 is a plan view illustrating a further example of a configuration of the cooling unit.
Fig. 6

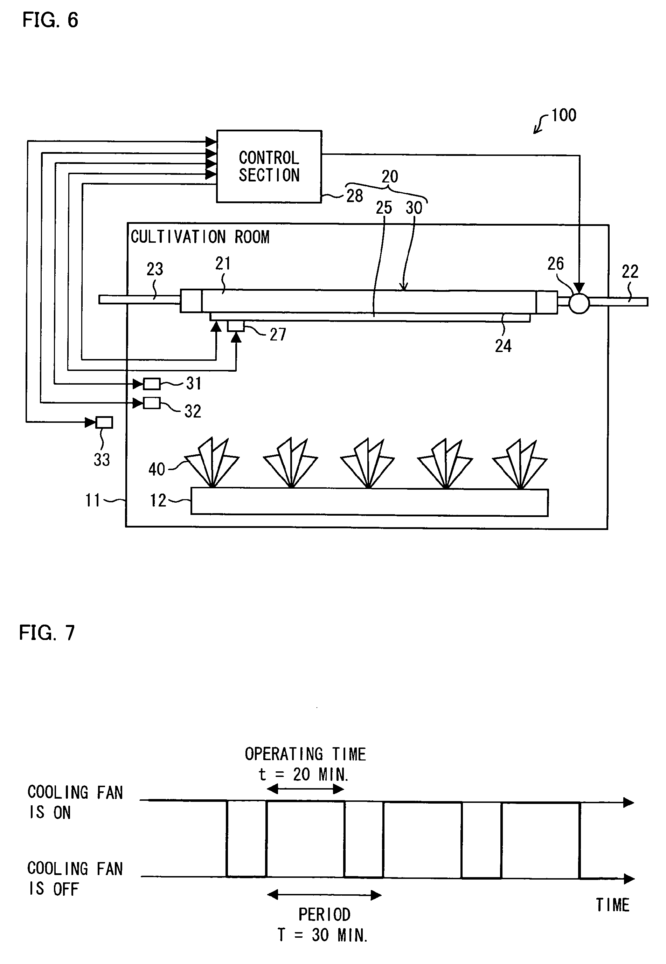

   Fig. 6 is a view schematically illustrating another example of a configuration of the plant cultivation device of the present invention.
Fig. 7
   Fig. 7 is a view schematically describing an example of the lighting device of the present invention, in which example the cooling fan repeatedly turns ON and OFF periodically.
Fig. 8

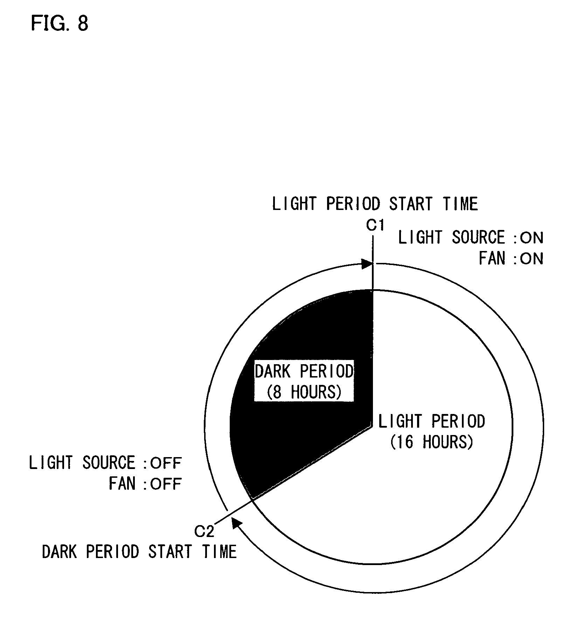

   Fig. 8 is a view schematically describing an example of the lighting device of the present invention, in which example the cooling fan turns ON and OFF in conjunction with ON/OFF of a light source.
Fig. 9

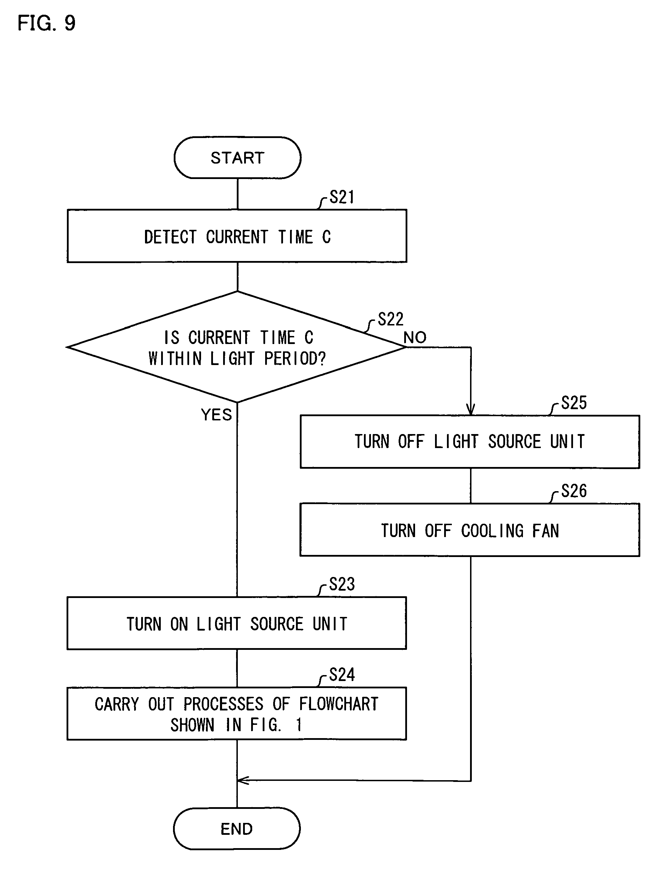

   Fig. 9 is a flowchart showing processes of controlling ON/OFF of the cooling fan shown in Fig. 8.
Fig. 10

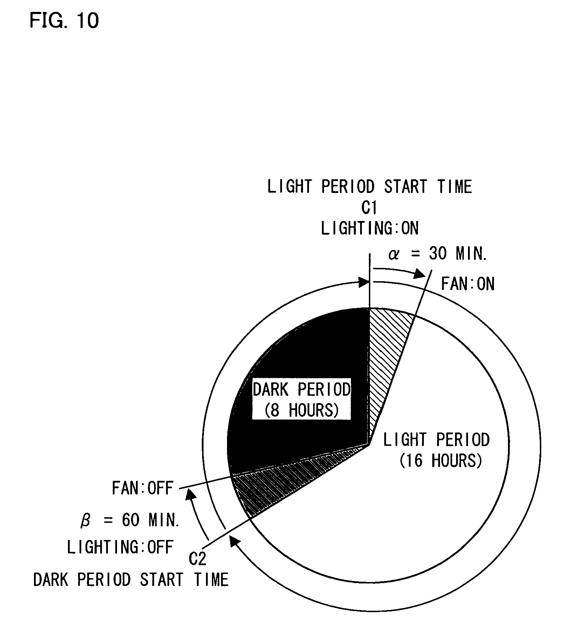

   Fig. 10 is a view schematically describing another example of the lighting device of the present invention, in which example the cooling fan turns ON and OFF in conjunction with ON/OFF of the light source.
Fig. 1

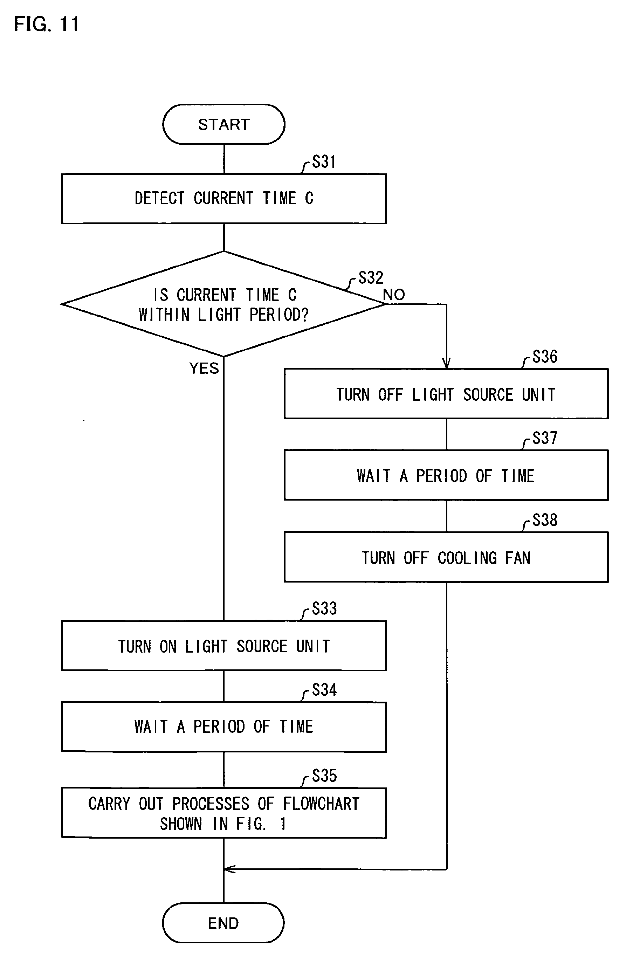

   Fig. 11 is a flowchart showing processes of controlling ON/OFF of the cooling fan shown in Fig. 10.

### Description of Embodiments

The following description discusses an embodiment of the present invention with reference to Figs. 1 to 11. Note however that, unless otherwise particularly noted, the sizes, materials, shapes and relative positions etc. of constituents described in this embodiment do not imply any limitation on the scope of the present invention, and are mere examples for description.

### (Schematic configuration of plant cultivation device)

Fig. 2 schematically shows a configuration of a plant cultivation device 10 in accordance with the present embodiment. As shown in Fig. 2, the plant cultivation device 10 includes a cultivation room 11 of the required size. The cultivation room 11 is large and spacious enough for a person to go therein and work therein.

In the cultivation room 11, there is provided a cultivation shelf (not illustrated) having certain length, width and height. In the cultivation shelf, one or more placement board(s) is provided horizontally. On the placement board, a tray 12 containing a plant 40 to be cultivated is placed. Note that, in an example shown in Fig. 2, only one tray 12 is illustrated for convenience of description; however, the number of the tray(s) 12 is not limited to one, and a plurality of trays 12 can be placed.

In the upper part of the cultivation room 11, there is provided a lighting device 20 for irradiating the plant 40 with light. The lighting device 20 includes a light source unit 25 using a light emitting diode (LED) as a light source and a cooling unit 30 for cooling heat generated by the light source unit 25.

The plant cultivation device 10 is further configured such that (i) a culture solution sucked with a pump from a culture solution tank is supplied to the tray 12 via an incoming pump and (ii) the culture solution thus supplied to the tray 12 is returned to the culture solution tank via an outgoing pump (these are not illustrated). This makes it possible to hydroponically cultivate the plant 40 in the tray 12. Further, a water purification device for purifying water in the culture solution contained in the culture solution tank and/or a fertilizer supplying device for supplying fertilizer to the culture solution, etc. can be provided.

Further, in the cultivation room 11, there are provided (i) an air-conditioning control device serving as an air-conditioning unit for air-condition and (ii) a carbon dioxide supplying device for supplying carbon dioxide to control the concentration of carbon dioxide in the room to a required level (these are not illustrated either). The air-conditioning control device includes an operating panel serving as a setting section for setting the temperature inside the cultivation room (such a temperature is hereinafter may be referred to as "inside air temperature") and the humidity in the cultivation room. The operating panel can be replaced with a remote operation terminal such as a remote controller or an information processing terminal (e.g., personal computer). Further, a humidifier or the like can be provided in the cultivation room 11.

According to the plant cultivation device 10 of the present embodiment, it is possible to set the temperature and humidity inside the room and time etc. by operating the operating panel. For example, the temperature and humidity inside the room and time can be set such that (i) in the daytime, a set temperature T is 25°C, humidity is 60% and operating time is 16 hours and (ii) at night, the set temperature T is 15°C, humidity is 80% and operating time is 8 hours. The carbon dioxide supplying device can set the concentration of carbon dioxide in the cultivation room 11 to for example 1000 ppm to 1500 ppm.

### (Configuration of lighting device)

The following description discusses specific configuration of the lighting device 20.

The lighting device 20 is constituted by the light source unit 25 including a light source for irradiating a plant with light, the cooling unit 30 for cooling heat generated by the light source, and a control section 28 for controlling the light source unit 25 and the cooling unit 30.

### (Cooling unit)

The cooling unit 30 includes a cooling section 21, an inlet pipe 22, an outlet pipe 23 and a fan 26.

The cooling section 21 is provided inside the cultivation room 11.

The cooling section 21 is configured like a heat pipe etc. such that outside air (air outside the cultivation room 11) serving as a cooling medium flows inside the cooling section 21. Heat exchange between the cooling medium and the light source (in the present embodiment, an LED), which is a heat source, achieves cooling of the light source. It should be noted that, although the cooling medium is air in the present embodiment, the present invention is not necessarily limited to this. In the present invention, a medium flowing inside the cooling section 21 can be any medium provided that it is capable of exchanging heat with the heat source. For example, a gas such as air or carbon dioxide or a liquid such as water can be used.

The cooling section 21 is made from for example highly heat-conductive metal such as iron, and is a rectangular parallelepiped 120 cm in length, 60 cm in width and 1 cm in height. In this case, the cooling section 21 is provided such that its large-area surfaces (top surface and bottom surface defined by the length and the width) are horizontal. The light source unit 25 is attached to the bottom surface of the cooling section 21 (described later).

A longitudinal end of the cooling section 21 thus configured is connected with an end of the inlet pipe 22, and the other end of the cooling section 21 is connected with an end of the outlet pipe 23. The other end of the inlet pipe 22, which end is not connected with the cooling section 21, is open to air outside the cultivation room 11 so that outside air (cooling medium) to flow inside the cooling section 21 is sent into the cooling section 21 via the inlet pipe 22. Further, the other end of the outlet pipe 23, which end is not connected with the cooling section 21, is open to air outside the cultivation room 11 so that the outside air (cooling medium) circulated in the cooling section 21 is emitted to outside the cultivation room 11 via the outlet pipe 23.

In the middle of the inlet pipe 22, there is provided the fan 26 (cooling medium flow control section) for causing air to flow at a required flow rate (e.g., 4 m³/min). Whether to turn ON or OFF the fan 26 is determined by the control section 28 (cooling medium flow control section). Upon receiving an instruction to turn ON from the control section 28, the fan 26 starts operating so that outside air (cooling medium) is supplied to the cooling section 21. Upon receiving an instruction to turn OFF from the control section 28, the fan 26 stops operating so that the outside air (cooling medium) is no longer supplied to the cooling section 21. By switching between ON and OFF of the fan 26 like above, the cooling unit 30 is switched between an ON state (operating state) and an OFF state (stopped state).

### (Light source unit)

The light source unit 25 is provided inside the cultivation room 11.

The light source unit 25 is attached to a base plate 24, which constitutes the bottom surface (base surface) of the cooling section 21 of the cooling unit 30, so as to be in tight contact to the base plate 24. The light source unit 25 is constituted by for example (i) a rectangular substrate (e.g., aluminum substrate or glass epoxy substrate) smaller in area than the base plate 24 of the cooling unit 30 and (ii) a plurality of light emitting diodes (LEDs) mounted on the substrate. The light source unit 25 can be constituted by a single substrate or can be constituted by a plurality of substrates. Further, the LEDs can be LEDs that emit light of the same color or can be constituted by different kinds of LEDs that emit light of different wavelengths. The different kinds of LEDs are for example made up of an LED having a luminescence peak at around 430 nm, an LED having a luminescence peak at around 660 nm, and an LED having a luminescence peak at around 700 nm.

Further, a light source temperature sensor 27 (temperature sensor) for measuring the temperature of the LEDs each serving as the light source is attached to the light source unit 25.

Since the light source unit 25 is attached to the base surface 24 of the cooling section 21 as above, a light emitting surface of the light source unit 25 faces toward the plant 40 contained in the tray 12.

### (Control section)

The control section 28 is configured to control ON/OFF (turn ON or OFF) of the light source unit 25 and ON/OFF (start operation or stop operation) of the cooling unit 30. In particular, according to the present embodiment, the control section 28 controls ON/OFF of the cooling unit in accordance with information on the temperature of the light source received from the light source temperature sensor 27. The control section 28 is a computer including a CPU and memory etc. The present embodiment is described on the assumption that the control section 28 is provided outside the cultivation room 11. Note, however, that this does not imply any limitation. The control section 28 can be provided inside the cultivation room 11.

### (How to attach light source unit to cooling section)

The following description discusses how specifically the light source unit 25 is attached to the bottom surface of the cooling section 21.
(a) of Fig. 3 shows an example of a configuration of the bottom surface of the cooling section 21. (b) of Fig. 3 is a side view as observed when the vicinity of the bottom surface of the cooling section 21 shown in (a) of Fig. 3 is viewed from an A direction. As illustrated in (a) and (b) of Fig. 3, the light source unit 25 is fixed to the base plate 24, which is the bottom surface of the cooling unit 30, such that a surface, of a substrate 51 of the light source unit 25, on which no LED 52 are mounted is in tight contact to the base plate 24. In (a) of Fig. 3, the light source unit 25 is indicated by dotted lines. The substrate 51 can be fixed to the base plate 24 with use of for example a screw (not illustrated). Further, grease or the like can be injected between the substrate 51 and the base plate 24 so that heat conductivity is increased.

The light source temperature sensor 27 can be provided for example to the base plate 24 of the cooling unit 30 in the same manner as the light source unit 25. As illustrated in (a) of Fig. 3, the light source temperature sensor 27 is preferably provided so as to be close to the inlet pipe 22. This is because condensation is most likely to from in the vicinity of the inlet pipe 22. Note, however, that this is an example. The present invention is not limited to this configuration.

The configuration of the bottom surface of the cooling section 21 is not limited to the above example, and therefore another configuration can be employed. Figs. 4 and 5 show other examples of configurations of the bottom surface of the cooling section 21.

The base plate 24 of the cooling section 21 shown in Fig. 4 has openings 24a, each of which is a little smaller in size than the substrate 51 of the light source unit 25. It should be noted in an example of Fig. 4 that (i) the light source unit 25 is constituted by six substrates 51 and (ii) the positions of the openings 24a correspond to the respective substrates 51.

That is, the six substrates 51 are provided to the base plate 24 so as to cover the respective six openings 24a in the base plate 24.

According to this configuration, outside air (cooling medium) flowing inside the cooling unit 30 directly strikes the substrates 51. This makes it possible to take heat away directly from the substrates 51, and thus possible to improve cooling efficiency. In a case of the example shown in Fig. 4, it is preferable that the openings 24a and the substrates 51 be sealed with a sealing material etc. so that air serving as the cooling medium does not escape from between the openings 24a and the substrates 51.

Fig. 5 shows an example in which the base plate 24 of the cooling section 21 is used as a substrate on which the LEDs 52 are placed. That is, in an example shown in Fig. 5, the LEDs 52 are mounted directly on the base plate 24 of the cooling section 21. This makes it possible to simplify assembling processes for the cooling unit 30 and the light source unit 25, and thus possible to reduce costs.

The light source temperature sensor 27 is not illustrated in Figs. 4 and 5, but is preferably provided in the position similar to that in the cooling unit 30 shown in Fig. 3.

Note that, it is preferable in all of the foregoing configurations that the outside (outer surface) of the cooling section 21, except for the base plate 24 where the light source unit 25 is provided, be covered with a heat insulating material such as urethane foam. This makes it possible to improve efficiency of heat exchange.

### (Method of controlling cooling unit in accordance with temperature of light source unit)

The following description discusses how to control, in the lighting device 20 of the present embodiment, ON/OFF of the fan 26 of the cooling unit 30 in accordance with the temperature of LEDs measured by the light source temperature sensor 27. Fig. 1 is a flowchart showing processes for controlling ON/OFF of the fan 26 (cooling fan) of the present embodiment. The processes described here are carried out by the control section 28.

First, the control section 28 obtains a set upper-limit temperature T1 (upper-limit temperature) (step S1). The set upper-limit temperature T1 is a temperature serving as a reference to start the operation of (turn ON) the fan 26. In view of this, the set upper-limit temperature T1 is preferably set such that, at temperatures above the set upper-limit temperature T1, performance of the light source may deteriorate. In the present embodiment, an LED is used as the light source. The LED generates heat and its temperature increases to approximately 100°C. However, depending on the design of a substrate and use conditions, the temperature of the LED may reach a temperature above 100°C. Although the life of an LED chip is long, a sealing material surrounding the chip deteriorates more quickly as the temperature increases (e.g., 60°C). As a result, performance of an LED lighting may deteriorate. In view of the circumstances, the set upper-limit temperature T1 can be set to for example 60°C. The set upper-limit temperature T1 can be stored in advance in the device or can be inputted by a user via the operating panel.

Next, the control section 28 obtains a set lower-limit temperature T2 (lower-limit temperature) (step S2). The set lower-limit temperature T2 is a temperature serving as a reference to stop operation of (turn OFF) the fan 26. In view of this, the set lower-limit temperature T2 is preferably set such that, at temperatures below the set lower-limit temperature T2, condensation etc. may form around the light source and adversely affect the light source. The set lower-limit temperature T2 can be stored in advance in the device or can be inputted by a user via the operating panel.

Next, the light source temperature sensor 27 measures the temperature T of the light source unit 25 (step S3). The temperature T thus measured is sent to the control section 28. The control section 28 determines whether or not the temperature T that it received is higher than the set upper-limit temperature T1 (step S4).

If the control section 28 has determined that the temperature T is higher than the set upper-limit temperature T1 (Yes in S4), the control section 28 detects a current state S of the fan 26 (step S5). If the state S indicates that the fan 26 is not operating (No in step S6), the control section 28 instructs the fan 26 to operate (step S7). This causes the fan 26 to start operating.

On the other hand, when the control section 28 detects the current state S of the fan 26 (step S5), if the state S indicates that the fan 26 is operating (Yes in step S6), the control section 28 keeps the operating state of the fan 26 and completes a series of processes (END).

If the control section 28 has determined that the temperature T is equal to or lower than the set upper-limit temperature T1 (No in S4), then the control section 28 determines whether or not the temperature T is lower than the set lower-limit temperature T2 (step S8). If the control section 28 has determined that the temperature T is lower than the set lower-limit temperature T2 (Yes in S8), the control section 28 detects the current state S of the fan 26 (step S9). If the state S indicates that the fan 26 is not operating (No in step S10), the control section 28 keeps the stopped state of the fan 26 and completes a series of processes (END). On the other hand, when the control section 28 detects the current state S of the fan 26 (step S9), if the state S indicates that the fan 26 is operating (Yes in step S10), the control section 18 instructs the fan 26 to stop operating (step S11). This causes the fan 26 to stop operating.

The series of processes in the flowchart shown in Fig. 1 are repeated in predetermined cycles. Note however that, in a case where the set upper-limit temperature T1 and the set lower-limit temperature T2 are fixed temperatures, the control section 28 can be configured such that the processes in steps S3 to S11 are repeatedly carried out. Since ON/OFF of the cooling fan is controlled by the control section 28 in accordance with the temperature of the light source unit like above, it is possible to turn ON the cooling fan to cool the light source unit only during a period during which the cooling is necessary. This makes it possible to reduce condensation forming around the light source due to overcooling, and also possible to reduce the operating time of the cooling fan to the minimum necessary.

According to a usual plant cultivation device, cultivation is carried out mostly under the condition where the humidity inside a room has been increased. Under such a condition, a decrease in temperature reduces the amount of water vapor required for saturation. That is, the cultivation is carried out under the condition where condensation readily forms. Further, in most cases, the cooling section is made from highly heat-conductive metal for effectively cooling the light source unit. When a cooling medium is allowed to pass through such a cooling section, the temperature of the surface of the cooling section decreases. Accordingly, the surface of the cooling section, on which the light source unit is provided, is most susceptible to condensation.

Under such circumstances, by stopping the cooling fan when the temperature of the light source unit becomes lower than a predetermined temperature as above, it is possible to reduce condensation forming on the surface of the cooling section.

### (Another example of configuration of plant cultivation device)

According to the foregoing lighting device 20, switching between ON/OFF of the cooling fan is controlled on the basis of the set upper-limit temperature T1 and the set lower-limit temperature T2, which are stored in advance or inputted via the operating panel.

Note, however, that the lighting device 20 of the present invention can be configured such that the set temperatures T1 and T2 can be changed according to the environments of the cultivation room 11 and its surroundings. Fig. 6 shows a configuration of a plant cultivation device 100 which is capable of changing the set temperatures T1 and T2 in accordance with the temperature and humidity inside the cultivation room 11 and the temperature outside the cultivation room 11.

As illustrated in Fig. 6, the plant cultivation device 100 includes an inside air temperature sensor 31 (second temperature sensor) for measuring the temperature (temperature of inside air) inside the cultivation room 11, a humidity sensor 32 for measuring the humidity inside the cultivation room 11, and an outside air temperature sensor 33 for measuring the temperature (temperature of outside air) outside the cultivation room 11. Configurations other than those described above of the plant cultivation device 100 are the same as those of the plant cultivation device 10 shown in Fig. 2. Therefore, their descriptions are omitted here.

In the plant cultivation device 100, the aforementioned two temperature sensors 31 and 33 and the humidity sensor 32 are provided in addition to the light source temperature sensor 27 for measuring the temperature in the vicinity of the light source. Information on the temperatures and humidity obtained by these sensors are sent to the control section 28. The control section 28 sets, in accordance with the information that it received, the set upper-limit temperature T1 and the set lower-limit temperature T2 so that these temperatures T1 and T2 are obtainable in the respective steps S1 and S2 in the flowchart shown in Fig. 1.

In particular, the set lower-limit temperature T2 is set for the purpose of mainly reducing condensation forming around the light source. The temperature at which condensation forms changes depending on the surrounding environments (temperature and humidity).

In view of this, the set lower-limit temperature T2 can be set for example to a dew point, which is calculated from the temperature and humidity inside the cultivation room 11 measured by the inside air temperature sensor 31 and the humidity sensor 32, respectively. This makes it possible to stop operation of the cooling fan when the temperature of the light source has decreased to the dew point, at which condensation starts forming. Accordingly, it is possible to more effectively prevent formation of condensation.

Alternatively, the set lower-limit temperature T2 can be set to dew point thus calculated + α (e.g., 5°C). This makes it possible to stop supply of the cooling medium a little before condensation starts forming. Accordingly, it is possible to further make sure that formation of condensation is prevented.

As described earlier, the set upper-limit temperature T1 can be set to a temperature at and below which the LED serving as the light source does not deteriorate. Alternatively, the set upper-limit temperature T1 can be set to for example a current temperature of inside air measured by the inside air temperature sensor 31. This makes it possible to cause the cooling fan to operate when the temperature of the light source becomes higher than the temperature of inside air.

Further, for example during a season in which outside air is higher in temperature than inside air, if outside air higher in temperature than inside air is supplied when the temperature of the light source is higher than the temperature of inside air, a reduction occurs in light source cooling effectiveness. In view of this, for example in summer during which outside air is higher in temperature than inside air, the set upper-limit temperature T1 can be set to the current temperature of outside air measured by the outside air temperature sensor 33. This makes it possible to cause the cooling fan to operate when the temperature of the light source becomes higher than the temperature of outside air.

The control like above is carried out in the following manner. The control section 28 recalculates the set temperatures T1 and T2 in a predetermined cycle in accordance with the information obtained from the inside air temperature sensor 31 and the humidity sensor 32, and changes the set temperatures T1 and T2 every time it recalculates them.

### (Configuration in which cooling fan periodically turns ON and OFF)

Further, for the purpose of preventing overcooling caused by continuous operation of the fan 26, the lighting device of the present invention can be configured such that, when the control section 28 instructs the fan 26 to turn ON in the processes of the flowchart shown in Fig. 1, the fan 26 periodically turns ON and OFF repeatedly as shown in Fig. 7. It is shown in an example of Fig. 7 that one period T is set to 30 minutes, and, out of the period T, the fan 26 is in the ON state during an operating time t which is 20 minutes.

In a case where the temperature of a cooling medium for use in cooling is low enough or in a case where no rapid cooling is necessary, it is possible to further reduce the operating time of the fan by intermittently turning ON and OFF the cooling fan as above. Further, by controlling the period T and the operating time t, it is possible to control the temperature of the light source unit according to the t/T.

In particular, in winter etc., since there is a large difference between the temperatures of outside air and inside air, condensation forms very readily. In this regard, it is possible to effectively reduce condensation by avoiding a drop in the temperature of the light source unit, by intermittently cooling the light source unit as shown in Fig. 7. For example, the intermittent cooling can be carried out aperiodically by changing the period T or the operating time t with time in accordance with the temperature detected by the light source temperature sensor 27.

### (Configuration in which cooling fan is switched between ON and OFF states in conjunction with ON/OFF of light source)

Further, the lighting device of the present invention can be configured such that the cooling fan is switched between ON and OFF states in conjunction with ON/OFF of the light source. This is described with reference to Figs. 8 and 9.

According to a general plant cultivation device, for the purpose of achieving a condition similar to natural environment in the cultivation room, a daytime condition (light period) and a night condition (dark period) are produced by turning ON and OFF the light source, respectively.

In Fig. 8, a point in time when the light source turns from OFF to ON is indicated as Light period start time: C1, whereas a point in time when the light source unit 25 turns from ON to OFF is indicated as Dark period start time: C2. In an example shown in Fig. 8, the fan 26 is controlled so as to turn from OFF to ON or from ON to OFF simultaneously with ON/OFF of the light source unit 25. It should be noted that, although the light period is 16 hours and the dark period is 8 hours in the example shown in Fig. 8, these are examples. This does not imply any limitation on the present invention.

The following description discusses, with reference to the flowchart shown in Fig. 9, a series of processes for switching between ON and OFF states of the light source as shown in Fig. 8. The processes shown in Fig. 9 are carried out by the control section 28. In a case where the control section 28 carries out these processes, the control section 28 has a timekeeping function for detecting the current time.

First, the control section 28 detects the current time C (step S21). Next, the control section 28 determines whether or not the current time C thus detected is within the light period (i.e., whether or not the current time C is a time between the time C1 and the time C2 shown in Fig. 8) (step S22). If the control section 28 has determined that the current time C is within the light period (Yes in S22), the control section 28 instructs the light source unit 25 to turn ON the LEDs (step S23). Then, when the light source unit 25 is put into the ON state, the control section 28 starts the foregoing processes of the flowchart shown in Fig. 1 (step S24). That is, the control section 28 starts control of ON/OFF of the light source in accordance with the temperature sensor.

On the other hand, in a case where the control section 28 has determined that the current time C is outside the light period (No in S22), the control section 28 instructs the light source unit 25 to turn OFF the LEDs (step S25). The control section 28 further instructs the fan 26 to stop operating (step S26).

The foregoing series of processes of the flowchart shown in Fig. 9 are repeated in predetermined cycles. That is, with the timekeeping function of the control section 28, the current time C is repeatedly detected in predetermined cycles, and if the current time C is continuously within the light period, the light source unit 25 is kept in the ON state and the processes in step S24 are continuously carried out while the light source unit 25 is kept in the ON state. On the other hand, if the current time C is continuously within the dark period, the light source unit 25 is kept in the OFF state.

According to the above configuration, the cooling medium stops being supplied when the light source unit is in the OFF state, i.e., when the light source unit does not need to be cooled, thereby the operating time of the cooling unit is reduced. This makes it possible to reduce operating cost.

The example shown in Figs. 8 and 9 can be modified such that the cooling fan is turned ON or OFF after a period of time after the light source has turned ON or OFF. This is described with reference to Figs. 10 and 11.

In Fig. 10, a point in time when the light source turns from OFF to ON is indicated as Light period start time: C1, whereas a point in time when the light source turns form ON to OFF is indicated as Dark period start time: C2. In an example shown in Fig. 10, the fan 26 is turned from OFF to ON after a period of time (time α) from the time C1 at which the light source unit 25 turns from OFF to ON. This is because the temperature of the light source unit does not rapidly increase for a period of time (e.g., time α) after the light source unit has turned from OFF to ON.

On the other hand, as to the Dark period start time C2, the fan 26 is turned from ON to OFF after a period of time (time β) after the light source unit 25 has turned from ON to OFF. This is because, since heat radiates for a period of time (e.g., time β) even after the light source unit has turned ON from OFF, the timing at which the cooling unit 30 is turned OFF is delayed so that the light source is cooled to some extent. It should be noted that, although the light period is 16 hours and the dark period is 8 hours in the example shown in Fig. 10, these are examples. This does not imply any limitation on the present invention.

The following description discusses, with reference to the flowchart shown in Fig. 11, a series of processes for switching between ON and OFF states of the light source as shown in Fig. 10. The processes shown in Fig. 11 are carried out by the control section 28.

First, the control section 28 detects the current time C (step S31). Next, the control section 28 determines whether or not the current time C thus detected is within the light period (i.e., whether or not the current time C is a time between the time C1 and the time C2 shown in Fig. 10) (step S32). If the control section 28 has determined that the current time C is within the light period (Yes in S32), the control section 28 instructs the light source unit 25 to turn ON the LEDs (step S33). After that, the control section 28 waits a period of time (e.g., time α) (step S34), and after the period of time, the control section 28 starts the foregoing processes of the flowchart shown in Fig. 1 (Step S35). That is, the control section 28 starts control of ON/OFF of the light source in accordance with the temperature sensor.

On the other hand, in a case where the control section 28 has determined that the current time C is outside the light period (No in S32), the control section 28 instructs the light source unit 25 to turn OFF the LEDs (step S36). After that, the control section 28 waits a period of time (e.g., time β) (step S37), and after the period of time, the control section 28 instructs the fan 26 to stop operating (step S38).

The foregoing series of processes of the flowchart shown in Fig. 11 are repeated in predetermined cycles in the same manner as those in Fig. 9.

The light source radiates heat for a period of time (e.g., time β) even after the light source unit has turned from ON to OFF. Therefore, by delaying the timing at which the cooling unit is turned OFF by carrying out the processes as above, it is possible to cool the light source unit to some extent. On the other hand, the temperature of the light source unit does not rapidly increase for a period of time (e.g., time α) after the light source unit has turned from OFF to ON. Therefore, by keeping the cooling fan in the OFF state for a period of time, it is possible to reduce the operating time of the cooling fan.

It should be noted that Fig. 10 shows a schedule for one day (24 hours) cultivation. In an example shown in Fig. 10, the light period is 16 hours, the dark period is 8 hours, the time α for which the control section 28 waits to cause the cooling unit to operate after the light source unit has turned from OFF to ON is 30 minutes, and the time β for which the control section 28 waits to cause the cooling unit to stop operating after the light source unit has turned from ON to OFF is 60 minutes. However, these are examples, and therefore do not imply any limitation on the present invention.

The present invention is not limited to the descriptions of the respective embodiments, but may be altered within the scope of the claims. An embodiment derived from a proper combination of technical means disclosed in different embodiments is encompassed in the technical scope of the invention.

As has been described, a lighting device in accordance with the present invention is a lighting device for irradiating a plant with light, including: a light source unit including a light source; a cooling unit including a cooling section which allows a cooling medium to flow therein, the cooling unit cooling the light source by heat exchange between the cooling medium supplied to the inside of the cooling section and the light source unit; a temperature sensor for measuring the temperature of the light source unit; and a cooling medium flow control section for starting and stopping supply of the cooling medium in accordance with the temperature measured by the temperature sensor.

The lighting device of the present invention includes the cooling unit for cooling the light source with the cooling medium. The cooling unit is configured such that supply of the cooling medium is controlled in accordance with the temperature of the light source unit measured by the temperature sensor.

According to the above configuration, it is possible to supply the cooling medium only during a period during which the light source unit is desired to be cooled. Accordingly, it is possible to prevent overcooling of the light source unit by stopping supply of the cooling medium during a period during which the light source unit is low enough in temperature and thus does not need to be cooled. This makes it possible to make condensation less likely to form on the light source unit. Further, by stopping supply of the cooling medium when no cooling is necessary, it is possible to reduce the operating time of the cooling unit, and thus possible to reduce operating cost of the lighting device.

The lighting device of the present invention can be configured such that: in the cooling medium flow control section, an upper-limit temperature and a lower-limit temperature are set; the cooling medium flow control section starts supply of the cooling medium when the temperature measured by the temperature sensor is higher than the upper-limit temperature; and the cooling medium flow control section stops supply of the cooling medium when the temperature measured by the temperature sensor is lower than the lower-limit temperature.

According to the configuration, it is possible to continue supplying the cooling medium only in a case where the temperature detected by the temperature sensor is between the lower-limit temperature and the upper-limit temperature. Therefore, by setting the lower-limit temperature and the upper-limit temperature to meet the purposes of reducing formation of condensation and preventing overheating of the light source, it is possible to make sure that these effects are obtained.

The lighting device of the present invention can be configured to further include: a second temperature sensor for measuring the temperature of a space in which the lighting device is placed; and a humidity sensor for measuring the humidity of the space in which the lighting device is placed, the cooling medium flow control section calculating a dew point of the space from the temperature and the humidity measured by the second temperature sensor and the humidity sensor, respectively, and setting the dew point as the lower-limit temperature.

According to the configuration, it is possible to stop supply of the cooling medium when the temperature in the vicinity of the light source has decreased to a dew point at which condensation starts to form. This makes it possible to more effectively prevent formation of condensation.

In order to further make sure that formation of condensation is prevented, the lower-limit temperature can be set to a dew point + α (e.g., 5°C). This makes it possible to stop supply of the cooling medium a little before condensation starts to form, and thus possible to further make sure that formation of condensation is prevented.

The lighting device of the present invention can be configured to further include: a second temperature sensor for measuring the temperature of a space in which the lighting device is placed, the cooling medium flow control section setting, as the upper-limit temperature, the temperature measured by the second temperature sensor.

According to the configuration, it is possible to start cooling the light source when the temperature in the vicinity of the light source becomes higher than the temperature of the space in which the lighting device is placed.

The lighting device of the present invention can be configured such that the cooling medium flow control section starts, when the light source turns ON, controlling supply of the cooling medium in accordance with the temperature measured by the temperature sensor, and stops supply of the cooling medium when the light source turns OFF.

According to the configuration, since the cooling medium stops being supplied when the light source is in the OFF state and thus does not need to be cooled, it is possible to reduce the operating time of the cooling unit. This makes it possible to reduce operating cost.

The lighting device of the present invention can be configured such that the cooling medium flow control section starts, after a period of time after the light source has turned ON, controlling supply of the cooling medium in accordance with the temperature measured by the temperature sensor, and stops supply of the cooling medium after a period of time after the light source has turned OFF.

According to the configuration, since the cooling medium stops being supplied when the light source is in the OFF state and thus does not need to be cooled, it is possible to reduce the operating time of the cooling unit. In addition, since the timing at which the light source turns ON or OFF and the timing at which the cooling unit starts or stops operating are caused to differ like above, it is possible to more efficiently cool the light source.

The lighting device of the present invention can be configured such that the cooling medium flow control section sets, in a period of time during which supply of the cooling medium is continued, predetermined periodic intervals during each of which supply of the cooling medium is stopped.

According to the configuration, it is possible to prevent rapid cooling of the light source. This makes it possible to more effectively reduce condensation.

The lighting device of the present invention can be configured such that the light source is a light emitting diode.

The light emitting diode generates heat when it is in the ON state. If the temperature of the heat becomes too high (e.g., approximately 80°C), this results in deterioration in performance and shortens the life of the light emitting diode. In vies of this, in a case where the light source is a light emitting diode, it is possible to prevent overheating of the light emitting diode and suppress deterioration in performance of the light emitting diode by employing the cooling unit as above.

The lighting device of the present invention can be configured such that the cooling medium is air outside a space in which the light source unit is provided.

According to the configuration, it is possible to simplify a configuration of supplying the cooling medium as compared to a configuration that uses as the cooling medium a liquid such as water.

In order to attain the foregoing object, a plant cultivation device in accordance with the present invention includes any of the foregoing lighting devices.

According to the plant cultivation device of the present invention, it is possible to supply the cooling medium only during a period during which the light source unit is desired to be cooled. This makes it possible to achieve a plant cultivation device capable of efficiently cooling the light sauce while reducing condensation forming around the light source.

A method of cooling a lighting device in accordance with the present invention is a method of cooling the lighting device including (i) a light source unit including a light source for irradiating a plant with light and (ii) a cooling unit including a cooling section which allows a cooling medium to flow therein, the cooling unit cooling the light source by heat exchange between the cooling medium supplied to the inside of the cooling section and the light source unit, said method including the steps of: measuring the temperature of the light source unit; and starting and stopping supply of the cooling medium in accordance with the temperature of the light source unit thus measured.

According to the method of cooling the lighting device of the present invention, supply of the cooling medium is controlled in accordance with the temperature of the light source unit measured by the temperature sensor.

According to the above method, it is possible to supply the cooling medium only during a period during which the light source unit is desired to be cooled. Accordingly, it is possible to make condensation less likely to form on the light source unit by stopping supply of the cooling medium during a period during which the light source unit is low enough in temperature and thus does not need to be cooled. Further, by stopping supply of the cooling medium when no cooling is necessary, it is possible to reduce the operating time of the cooling unit, and thus possible to reduce operating cost of the lighting device.

The method of cooling the lighting device of the present invention can be configured such that, in the step of starting and stopping supply of the cooling medium, the supply of the cooling medium is started when the temperature measured by a temperature sensor for measuring the temperature of the light source unit is higher than a predetermined upper-limit temperature; and the supply of the cooling medium is stopped when the temperature measured by the temperature sensor is lower than a predetermined lower-limit temperature.

According to the configuration, it is possible to continue supplying the cooling medium only in a case where the temperature detected by the temperature sensor is between the lower-limit temperature and the upper-limit temperature. Therefore, by setting the lower-limit temperature and the upper-limit temperature to meet the purposes of reducing formation of condensation and preventing overheating of the light source, it is possible to make sure that these effects are obtained.

### Industrial Applicability

With use of a lighting device of the present invention, it is possible to efficiently cool a light source while reducing condensation forming around the light source. Therefore, the lighting device of the present invention is applicable to an artificial light source for use in a plant factory or a plant cultivation device, inside of which plants such as vegetables are cultivated.

### Reference Signs List

10 Plant cultivation device
11 Cultivation room
20 Lighting device
21 Cooling section
25 Light source unit
26 Fan (cooling medium flow control section)
27 Light source temperature sensor (temperature sensor)
28 Control section (cooling medium flow control section)
30 Cooling unit
31 Inside air temperature sensor (second temperature sensor)
32 Humidity sensor
33 Outside air temperature sensor 40 Plant
51 Substrate
52 LED (light source)

## Claims

1. A lighting device for irradiating a plant with light, comprising:
a light source unit including a light source;
a cooling unit including a cooling section which allows a cooling medium to flow therein, the cooling unit cooling the light source by heat exchange between the cooling medium supplied to the inside of the cooling section and the light source unit;
a temperature sensor for measuring the temperature of the light source unit; and
a cooling medium flow control section for starting and stopping supply of the cooling medium in accordance with the temperature measured by the temperature sensor.

2. The lighting device according to claim 1, wherein:
in the cooling medium flow control section, an upper-limit temperature and a lower-limit temperature are set;
the cooling medium flow control section starts supply of the cooling medium when the temperature measured by the temperature sensor is higher than the upper-limit temperature; and
the cooling medium flow control section stops supply of the cooling medium when the temperature measured by the temperature sensor is lower than the lower-limit temperature.

3. The lighting device according to claim 2, further comprising:
a second temperature sensor for measuring the temperature of a space in which the lighting device is placed; and
a humidity sensor for measuring the humidity of the space in which the lighting device is placed,
the cooling medium flow control section calculating a dew point of the space from the temperature and the humidity measured by the second temperature sensor and the humidity sensor, respectively, and setting the dew point as the lower-limit temperature.

4. The lighting device according to claim 2, further comprising:
a second temperature sensor for measuring the temperature of a space in which the lighting device is placed,
the cooling medium flow control section setting, as the upper-limit temperature, the temperature measured by the second temperature sensor.

5. The lighting device according to any one of claims 1 through 4, wherein the cooling medium flow control section starts, when the light source turns ON, controlling supply of the cooling medium in accordance with the temperature measured by the temperature sensor, and stops supply of the cooling medium when the light source turns OFF.

6. The lighting device according to any on of claims 1 through 4, wherein the cooling medium flow control section starts, after a period of time after the light source has turned ON, controlling supply of the cooling medium in accordance with the temperature measured by the temperature sensor, and stops supply of the cooling medium after a period of time after the light source has turned OFF.

7. The lighting device according to any one of claims 1 through 4, wherein the cooling medium flow control section sets, in a period of time during which supply of the cooling medium is continued, predetermined periodic intervals during each of which supply of the cooling medium is stopped.

8. The lighting device according to any one of claims 1 through 7, wherein the light source is a light emitting diode.

9. The lighting device according to any one of claims 1 through 8, wherein the cooling medium is air outside a space in which the light source unit is provided.

10. A plant cultivation device comprising a lighting device recited in any one of claims 1 through 9.

11. A method of cooling a lighting device, the lighting device including (i) a light source unit including a light source for irradiating a plant with light and (ii) a cooling unit including a cooling section which allows a cooling medium to flow therein, the cooling unit cooling the light source by heat exchange between the cooling medium supplied to the inside of the cooling section and the light source unit,
said method comprising the steps of:
measuring the temperature of the light source unit; and
starting and stopping supply of the cooling medium in accordance with the temperature of the light source unit thus measured.

12. The method according to claim 11, wherein, in the step of starting and stopping supply of the cooling medium,
the supply of the cooling medium is started when the temperature measured by a temperature sensor for measuring the temperature of the light source unit is higher than a predetermined upper-limit temperature; and
the supply of the cooling medium is stopped when the temperature measured by the temperature sensor is lower than a predetermined lower-limit temperature.
